# EUROPÄISCHE PATENTSCHRIFT

(11) **EP 2 450 905 B1**
(45) Veröffentlichungstag und Bekanntmachung des Hinweises auf die Patenterteilung: **08.07.2015**
(21) Anmeldenummer: 11008261.7
(22) Anmeldetag: 13.10.2011
(51) Int. Cl.: G21C 9/00, G21C 11/02, G21C 11/08, G21C 13/00, G21C 15/18

(54) **Kernreaktor mit von außen flutbarem Reaktordruckbehälter**
Nuclear reactor with reactor pressure vessel flooded from outside
Réacteur nucléaire avec cuve sous pression pouvant être remplis de l'extérieur

(30) Priorität: 04.11.2010 DE 102010050211
(43) Veröffentlichungstag der Anmeldung: 09.05.2012
(73) Patentinhaber: AREVA GmbH, 91052 Erlangen (DE)
(72) Erfinder: Worsch, Marcus, 91083 Baiersdorf (DE); Scheler, Reiner, 91301 Forchheim (DE)
(74) Vertreter: Tergau & Walkenhorst Patentanwälte - Rechtsanwälte

(56) Entgegenhaltungen:
- DE-A1- 2 736 637
- US-A- 5 343 506
- US-A1- 2008 198 960

## Beschreibung

Die Erfindung betrifft einen Kernreaktor, insbesondere einen Leichtwasserreaktor, der zur Stromerzeugung in einem Kernkraftwerk eingesetzt wird. Im Zuge der Weiterentwicklung der Kernreaktor- bzw. der Leichtwasserreaktortechnologie sollen einerseits Effektivität sowie Wirtschaftlichkeit gesteigert werden, und andererseits soll durch höhere Qualitäts- sowie Sicherheitsstandards die Wahrscheinlichkeit für das Auftreten möglicher Störfälle verringert werden. Da Störfälle im Allgemeinen jedoch trotz aller Sicherheitsmaßnahmen nicht gänzlich ausgeschlossen werden können, werden bei einem Kernreaktor-Sicherheitskonzept bestimmte Störfälle stets mit einkalkuliert, um durch geeignete Vorkehrungen auch dann noch eine Gefährdung der Bevölkerung zu verhindern. In diesem Kontext bezeichnet man als größten anzunehmenden Unfall (GAU) einen Störfall, für den das Sicherheitskonzept eines Kernreaktors noch ausgelegt ist.

Das Dokument US 2008/198960 A1 offenbart einen Kernreaktor mit einer dessen Reaktordruckbehälter umschließenden thermischen Isolierung, mit einem Flutungsraum zwischen dem Reaktordruckbehälter und der thermischen Isolierung, sowie einen Abschirmring.

In der Offenlegungsschrift DE 35 07 931 A1 wird ein Kernreaktor beschrieben, zwischen dessen Kernmantel oder Reaktordruckbehälter und dessen Betonschale ein Freiraum vorgesehen ist. In diesem Freiraum befindet sich ein Strahlungsschutzschild aus kranzförmig um den Kernmantel angeordneten Elementen. Jene Elemente sind aus einem absorbierenden Werkstoff gefertigt und sollen eine Ausbreitung von Strahlung aus dem Kern des Reaktors in den Freiraum zwischen Kernmantel und Betonschale oder Betonmantel unterbinden.

Aus der Veröffentlichung WO 2009 / 053322 A1 ist ein Kernreaktor bekannt, für dessen Reaktordruckbehälter im Störfall, genauer im Falle einer Überhitzung des Reaktorkerns und somit einer drohenden Kernschmelze, eine Außenkühlung vorgesehen ist. Die Außenkühlung erfolgt dabei mit Hilfe einer Flüssigkeit, welche im Bedarfsfall in einen Frei- oder Hohlraum zwischen Reaktordruckbehälter und Betonhülle eingeleitet wird und einen Teil der thermischen Energie absorbiert. Im Normalbetrieb hingegen sind thermische Verluste unerwünscht, weswegen das Konzept der Außenkühlung des Reaktordruckbehälters diesbezüglich unvorteilhaft ist.

Ausgehend hiervon liegt der Erfindung die Aufgabe zugrunde, einen Kernreaktor derart weiterzuentwickeln, dass eine effektive und schnelle Notfall-Außenkühlung des Reaktordruckbehälters bei zugleich guter Strahlungsabschirmung und geringen thermischen Verlusten im Normalbetrieb gewährleistet ist.

Diese Aufgabe ist durch die Merkmalskombination des Anspruchs 1 in erfinderischer Weise gelöst. Die Unteransprüche beinhalten teilweise zweckmäßige und teilweise für sich selbst erfinderische Weiterbildungen dieser Erfindung.

Bei einem erfindungsgemäßen Kernreaktor ist dessen Reaktordruckbehälter von einer thermischen Isolierung umschlossen, was eine Reduzierung der Wärmeverluste im Normalbetrieb des Kernreaktors zur Folge hat. Beide Reaktorelemente, der Reaktordruckbehälter und die thermische Isolierung, sind durch einen Flutungsraum räumlich voneinander getrennt. In der thermischen Isolierung ist ein verschließbarer Durchbruch vorgesehen, durch welchen im Störfall eine Kühlflüssigkeit, zum Beispiel Kühlwasser, zur Außenkühlung des Reaktordruckbehälters in den Flutungsraum eingeleitet werden kann. Auf diese Weise wird bedarfsweise eine Notfallkühlung realisiert, deren Effektivität im Wesentlichen nicht durch die eingesetzte thermische Barriere beeinträchtigt ist. Innerhalb des Flutungsraumes ist ein Abschirmring fixiert, der diesen in zwei voneinander separierte Flutungskammern unterteilt. Jener Abschirmring fungiert dabei vor allem als materielle Barriere zur Abschirmung eines Wartungsbereiches des Kernreaktors, in dem sich zeitweise Personal aufhält, gegen Strahlung. Für eine möglichst effektive Notfallkühlung ist es jedoch notwendig, dass die Kühlflüssigkeit in beide Futungskammern gelangt. Daher verbindet ein Bypasskanal, welcher im Normalbetrieb des Kernreaktors geschlossen und im Störfall zu öffnen ist, die beiden Flutungskammern miteinander.

Gemäß einer bevorzugten Ausführungsform ist der Bypasskanal außen am Abschirmring vorbei zumindest teilweise innerhalb eines den Reaktordruckbehälter samt seiner thermischen Isolierung umhüllenden Betonmantels geführt. Auf diese Weise bleibt der Abschirmring unversehrt und die Abschirmwirkung vollständig erhalten.

Als vorteilhaft wird es weiter angesehen, wenn mehrere über den Umfang des Abschirmringes verteilt angeordnete Bypasskanäle vorgesehen sind. Hierdurch kann die Einleitung der Kühlflüssigkeit in die beiden Flutungskammern in kürzerer Zeit erfolgen.

In einer bevorzugten Ausgestaltung verschließt je ein Verschlußkörper im Normalbetrieb des Kernreaktors dasjenige Ende eines Bypasskanals, welches in jene Flutungskammer mündet, in der der Durchbruch durch die thermische Isolierung angeordnet ist. Dieser Verschlußkörper ist über ein Koppelgetriebe antriebsmäßig mit einem Schwimmerkörper, der ebenfalls in besagter Flutungskammer positioniert ist, verbunden. Tritt nun ein entsprechender Störfall ein, so füllt sich jene Flutungkammer mit der Kühlflüssigkeit. Auf den Schwimmerkörper wirkt sodann eine resultierende Auftriebskraft, die den Schwimmerkörper in Bewegung setzt. Über das Koppelgetriebe erfolgt eine Übertragung der resultierenden Auftriebskraft und damit der Bewegung auf den Verschlußkörper und in Konsequenz eine Öffnung des Bypasskanals. Damit ist ein einfacher passiver Öffnungs- und Schließmechanismus realisiert. Derartige passive Mechanismen bedürfen keiner aktiven Steuerung und keiner zusätzlichen Energiezufuhr von außen und sind deshalb typischerweise weniger defekt- oder störanfällig.

Von Vorteil ist zudem in diesem Zusammenhang eine Führungsvorrichtung für den Bewegungsapparat. Dabei kann es sich beispielsweise um einen rohrartigen Körper handeln, in dem der Schwimmerkörper während seiner Auftriebsbewegung geführt wird. Eine solche Führungsvorrichtung fungiert gleichzeitig als Schutz gegen Erschütterungen, wie sie zum Beispiel durch ein Erdbeben hervorgerufen werden können.

Einer bevorzugten Ausführung entsprechend ist an der Unterseite des Schwimmerkörpers ein Greifelement zur Funktionsprüfung im Rahmen einer Wartung vorgesehen. Damit kann in regelmäßigen Abständen die Beweglichkeit des Verschlußmechanismuses durch eine Auf-und Abbewegung von Hand kontrolliert werden. Das heißt, es ist eine sehr einfache und schnelle wiederkehrende Prüfung möglich.

Schließlich ist es auch zweckmäßig den Verschlußkörper aus einem thermisch isolierenden Material zu fertigen. Dadurch kann die fehlende thermische Isolierwirkung im Bereich eines Bypasses, welcher zum Zwecke der Umgehung des Abschirmringes auch die thermische Isolierung durchsetzt, teilweise kompensiert werden.

Anhand eines Ausführungsbeispiels wird die Erfindung nachfolgend weiter beschrieben. Es zeigen in jeweils schematisierter Darstellung:
- Fig. 1: einen Längsschnitt durch einen Kernreaktor, insbesondere vom Typ Siedewasserreaktor, mit Flutungsraum und Abschirmring im Flutungsraum,
- Fig. 2: einen Querschnitt durch einen Bypasskanal und dessen näheres Umfeld im Kernreaktor,
- Fig. 3: eine schematische Darstellung eines Verschlußsystems für den Bypasskanal im Normalbetrieb des Kernreaktors, und
- Fig. 4: eine schematische Darstellung eines Verschlußsystems für den Bypasskanal im Störfall.

Einander entsprechende Teile sind in allen Figuren mit den gleichen Bezugszeichen versehen.

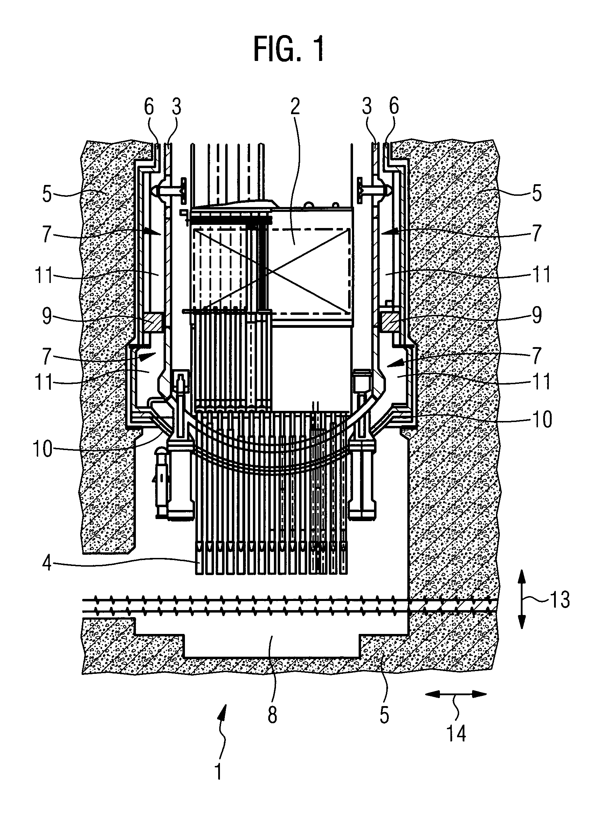

Ein erfindungsgemäßer Kernreaktor 1 ist in Fig. 1 schematisch dargestellt. Im oberen Drittel des ausschnittsweise abgebildeten Längsschnittes befindet sich der sogenannte Kern 2 des Kernreaktors 1, in welchem die moderierte Kernzerfallslawine ausgelöst wird. Eingeschlossen ist der von Reaktorkühlmittel umspülte Kern 2 in einem Reaktordruckbehälter 3. Am Boden des Reaktordruckbehälters 3 sind Kontroll- oder Steuerstäbe 4 angeordnet, die im Bedarfsfall bis in den Kern 2 hinein verfahren werden können. Eingebettet ist die Apparatur in einen Mantel aus Beton. Dieser Betonmantel 5 dient einerseits als Halterung für den Reaktordruckbehälter 3 samt Steuerstäben 4 und andererseits als Strahlungsschutzhülle. Zwischen dem Betonmantel 5 und dem Reaktordruckbehälter 3 ist eine thermische Isolierung 6 vorgesehen, die im Normalbetrieb des Kernreaktors 1 unerwünschte Wärmeverluste reduziert.

Im Sicherheitskonzept des hier beschriebenen Kernreaktors 1 wird als größter anzunehmender Unfall (GAU) ein Störfall berücksichtigt, der zu einer Kernschmeize führt. Tritt ein derartiger Störfall ein, so erfolgt eine Außenkühlung des Reaktordruckbehälters 3 durch eine Kühlflüssigkeit, beispielsweise Wasser. Hierfür ist zwischen dem Reaktordruckbehälter 3 und der thermischen Isolierung 6 ein Hohlraum oder Flutungsraum 7 vorgesehen, welcher über einen nicht mit dargestellten Durchbruch durch die thermische Isolierung 6 im Bodenbereich des Reaktordruckbehälters 3 mit einer Kammer 8 unterhalb des selbigen verbunden ist. In diese in den Betonmantel 5 eingearbeitete Kammer 8, in welcher auch der aus dem Reaktordruckbehälter 3 herausragende Teil der Steuerstäbe 4 bzw. deren Antrieb positioniert ist, kann, sofern notwendig, die Kühlflüssigkeit eingeleitet werden. Der Raum um den Reaktordruckbehälter 3 samt thermischer Isolierung 6 und über den Durchbruch auch der Flutungsraum 7 werden sodann von unten nach oben mit der Kühlflüssigkeit aufgefüllt.

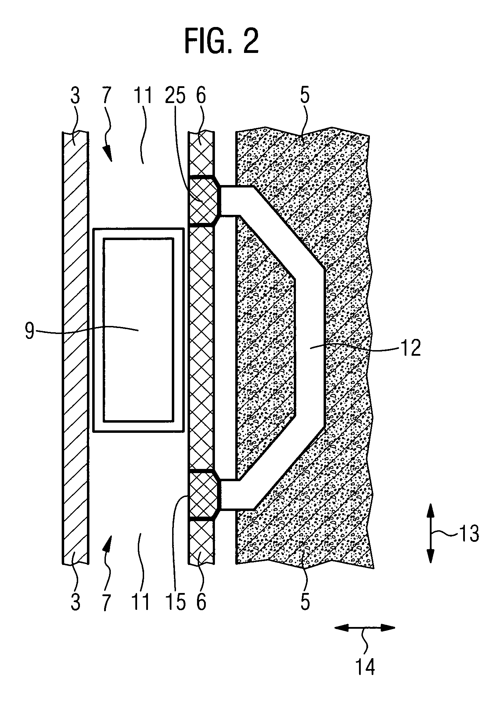

Innerhalb des Flutungsraumes 7 ist etwas unterhalb des Kerns 2 ein Abschirmring 9 fixiert. Dieser fungiert ebenso wie eine Abschirmplatte 10 im Bodenbereich des Reaktordruckbehälters 3 als materielle Barriere zur Abschirmung der Kammer 8, in der sich zeitweise auch Wartungspersonal aufhält, gegen Strahlung. Der Abschirmring 9 separiert den Flutungsraum 7 in zwei getrennte Flutungskammern 11. Als Folge kann sich im Störfall zunächst nur die untere Flutungskammer 11, in die der Durchbruch durch die thermische Isolierung 6 mündet, mit Kühlflüssigkeit füllen. Damit jedoch die Kühlung des Reaktordruckbehälters 3 im Bedarfsfall möglichst effektiv erfolgt, ist es vorgesehen, dass auch in die obere Flutungskammer 11 Kühlflüssigkeit eingeleitet wird. Hierzu dient ein in Fig. 2 skizzierter Bypasskanal 12, der um den Abschirmring 9 herum oder außen am selbigen vorbei geführt ist und die beiden Flutungskammern 11 miteinander verbindet.

Im Ausführungsbeispiel weist der Bypasskanal 12 eine U-ähnliche Grundform mit z. B. kreisförmigem Querschnitt auf. Dabei verläuft die Basis der Grundform in axialer Richtung 13 durch den Betonmantel 5 und die beiden Schenkel sind in radialer Richtung 14 nach Art eines Rohres durch die thermische Isolierung 6 hindurch geführt. Zur Gewährleistung eines günstigen Kühlflüssigkeitsflusses durch den Bypasskanal 12 sind zudem Übergangsabschnitte, beidseitig jeweils zwischen Schenkel und Basis, mit schrägem Verlauf in selbigen eingearbeitet.

Aufgrund der gewählten Form und Anordnung des Bypasskanals 12 bleiben Reaktordruckbehälter 3 und Abschirmring 9 gegenüber der Darstellung in Fig. 1 unverändert erhalten. Gleichzeitig wird, dadurch, dass die beiden Durchführungen durch die thermischen Isolierung 6 in radialer Richtung 14 verlaufen, der Bereich in dem die thermische Isolierwirkung verloren geht, möglichst klein gehalten. Im Normalbetrieb des Kernreaktors 1 ist zudem ein vorzugsweise T-förmiger oder zylindrischer Verschlußkörper 15 aus einem thermisch isolierenden Material in der Durchführung der unteren Flutungskammer 11 platziert. Dieser verschließt den Bypasskanal 12 flüssigkeitsdicht und ersetzt überdies den fehlenden Abschnitt der thermischen Isolierung 6. In der Durchführung zur oberen Flutungskammer 11 ist ebenfalls ein Verschlußkörper 25 platziert (siehe Fig. 2 bis 4).

Im Störfall jedoch soll der Bypasskanal 12 entsperrt sein, damit das Kühlwasser nicht nur in die untere sondern auch in die obere Flutungskammer 11 einströmen kann. Dazu ist der Verschlußkörper 15 über ein in der unteren Flutungskammer 11 positioniertes Koppelgetriebe 16 antriebsmäßig mit einem ebenfalls in dieser Flutungskammer 11 angeordneten Schwimmerkörper 17 verbunden. Tritt nun ein entsprechender Störfall ein, so füllt sich jene untere Flutungkammer 11 mit der durch den Durchbruch im Bodenbereich des Reaktordruckbehälters 3 eindringenden Kühlflüssigkeit. Auf den Schwimmerkörper 17, welcher in einer rohrartigen Führung 18 einliegt, wirkt sodann eine resultierende Auftriebskraft, die diesen in Bewegung setzt. Über das Koppelgetriebe 16 erfolgt eine Übertragung der resultierenden Auftriebskraft auf den Verschlußkörper 15, so dass dieser in radialer Richtung nach innen zum Reaktordruckbehälter 3 hin aus der Mündungsöffnung des Bypasskanals 12 herausgezogen und in Konsequenz der Bypasskanal 12 freigegeben wird. Damit ist ein einfacher passiver Öffnungs- und Schließmechanismus realisiert. Derartige passive Mechanismen bedürfen keiner aktiven Steuerung oder fremdenergieabhängiger Antriebsmittel und sind deshalb typischerweise weniger defekt- oder störanfällig.

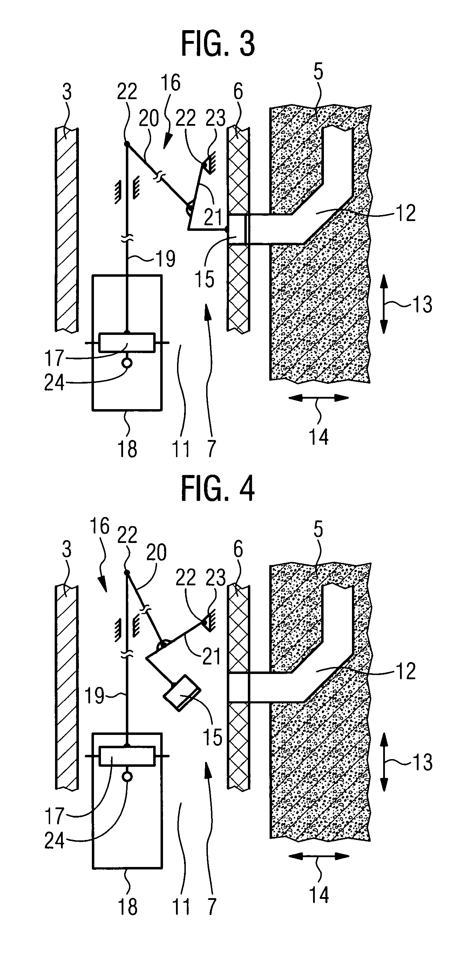

Als Koppelgetriebe 16 können verschiedene, dem aktuellen Stand der Technik entsprechende Ausführungen zum Einsatz kommen. Die Skizzierungen in Fig. 3 und Fig. 4 zeigen eine sehr einfach aufgebaute, rein mechanisch wirkende Variante mit einem Signalglied 19, einer Koppel 20 und einer Schwinge 21. Diese stangen- oder hebelartigen Komponenten sind über Drehgelenke 22 untereinander und darüber hinaus mit einer Aufhängung 23 verbunden. In einer bevorzugten Weiterentwicklung ist es vorgesehen, zusätzlich einen Kraftverstärker einzusetzen, der auslöst, sobald sich der Schwimmerkörper 17 in Bewegung setzt. Auf diese Weise wird gewährleistet, dass der Mechanismus in sehr kurzer Zeit vom geschlossenen in den geöffneten Zustand wechselt. Zur Vermeidung eines unerwünschten Zurückschwingens der Schwinge 21, und damit des gesamten Mechanismus, ist es zudem zweckmäßig, eine Arretierung einzuarbeiten, mit der die Schwinge 21 im geöffneten Zustand in ihrer Endlage gehalten wird.

Am Boden des Schwimmerkörpers 17 ist schließlich noch ein Greifelement 24, vorzugsweise ein Greifring, fixiert. Dadurch ist es möglich, in regelmäßigen Abständen von Hand eine Funktionsprüfung des Öffnungs- und Schließmechanismus vorzunehmen, indem der Schwimmerkörper 17 nach oben gedrückt und anschließend wieder zurückgezogen wird.

Für den oberen Verschlußkörper 25 kann ein ähnlicher Auslöse- und Öffnungsmechanismus vorgesehen sein. Alternativ sitzt der Verschlußkörper 25 nicht allzu fest in der zugeordneten Mündungsöffnung des Bypasskanals 12 und wird durch den Druck des in den Bypasskanals einströmenden Kühlmittels nach innen zum Reaktordruckbehälter 3 hin gedrückt und gibt dadurch nach Art eines Berstverschlußes die Öffnung frei.

### Bezugszeichenliste

- 1: Kernreaktor
- 2: Kern
- 3: Reaktordruckbehälter
- 4: Steuerstab
- 5: Betonmantel
- 6: Thermische Isolierung
- 7: Flutungsraum
- 8: Kammer
- 9: Abschirmring
- 10: Abschirmplatte
- 11: Flutungskammer
- 12: Bypasskanal
- 13: axiale Richtung
- 14: radiale Richtung
- 15: Verschlußkörper
- 16: Koppelgetriebe
- 17: Schwimmerkörper
- 18: Führung
- 19: Signalglied
- 20: Koppel
- 21: Schwinge
- 22: Drehgelenk
- 23: Aufhängung
- 24: Greifelement
- 25: Verschlußkörper

## Patentansprüche

1. Kernreaktor (1)
- mit einer dessen Reaktordruckbehälter (3) umschließenden thermischen Isolierung (6),
- mit einem Flutungsraum (7) zwischen dem Reaktordruckbehälter (3) und der thermischen Isolierung (6), sowie
- mit einem im Flutungsraum (7) fixierten Abschirmring (9), der als materielle Barriere den Flutungsraum (7) in zwei getrennte Flutungskammern (11) unterteilt,
wobei ein Bypasskanal (12) die beiden Flutungskammern (11) miteinander verbindet, welcher im Normalbetrieb des Kernreaktors (1) verschlossen und im Störfall zu öffnen ist.

2. Kernreaktor (1) nach Anspruch 1, wobei der Bypasskanal (12) den Abschirmring (9) umgebend zumindest teilweise innerhalb eines den Reaktordruckbehälter (3) samt seiner thermischen Isolierung (6) umhüllenden Betonmantels (5) geführt ist.

3. Kernreaktor (1) nach Anspruch 1 oder 2 mit mehreren über den Umfang des Abschirmringes (9) verteilt angeordneten Bypasskanälen (12).

4. Kernreaktor (1) nach einem der Ansprüche 1 bis 3, wobei ein Schwimmerkörper (17) im Flutungsraum (7) positioniert ist, der einen ebenfalls im Flutungsraum (7) angeordneten Verschlußkörper (15) des Bypasskanals (12) in Abhängigkeit vom Flüssigkeitsstand im Flutungsraum (7) steuert und dazu mit diesem über einen Koppelmechanismus, insbesondere ein Koppelgetriebe (16) antriebsmäßig verbunden ist.

5. Kernreaktor (1) nach Anspruch 4, wobei für den Schwimmkörper (17) und/oder die Elemente des Koppelgetriebes (16) eine Führung (18) vorgesehen ist.

6. Kernreaktor (1) nach einem der Ansprüche 4 bis 5, wobei an der Unterseite des Schwimmerkörpers (17) ein Greifelement (24) zur Funktionsprüfung im Wartungsfall angeformt ist.

7. Kernreaktor (1) nach einem der Ansprüche 1 bis 6, wobei der Verschluß eines Bypasskanals (12) im Wesentlichen aus einem thermisch isolierenden Werkstoff gefertigt ist.

## Claims

1. Nuclear reactor (1) comprising
- thermal insulation (6) which surrounds the reactor pressure vessel (3) of said nuclear reactor,
- a flooding space (7) between the reactor pressure vessel (3) and the thermal insulation (6), and
- a shield ring (9) which is fixed in the flooding space (7) and acts as a material barrier dividing the flooding space (7) into two separate flooding chambers (11),
wherein a bypass channel (12) interconnects the two flooding chambers (11) and is closed under normal operating conditions of the nuclear reactor (1) and is to be opened in the event of a malfunction,

2. Nuclear reactor (1) according to claim 1, wherein the bypass channel (12) is guided at least in part inside a concrete shell (5) which encloses the reactor pressure vessel (3) and the thermal insulation (6) thereof in such a way that said channel surrounds the shield ring (9).

3. Nuclear reactor (1) according to either claim 1 or claim 2, comprising a plurality of bypass channels (12) which are arranged so as to be distributed over the circumference of the shield ring (9).

4. Nuclear reactor (1) according to any of claims 1 to 3, wherein a float body (17) is positioned in the flooding space (7) and controls a closure body (15) for the bypass channel (12) on the basis of the fluid level in the flooding space (7), said closure body also being arranged in the flooding space (7), for which purpose the float body is drivingly connected to said flooding space by means of a coupling mechanism, in particular a coupling gear (16).

5. Nuclear reactor (1) according to claim 4, wherein a guide (18) is provided for the float body (17) and/or the elements of the coupling gear (16).

6. Nuclear reactor (1) according to either claim 4 or claim 5, wherein a gripping element (24) is integrally formed on the underside of the float body (17) for testing the function during maintenance work.

7. Nuclear reactor (1) according to any of claims 1 to 6, wherein the closing mechanism for a bypass channel (12) is substantially produced from a thermally insulating material.

## Revendications

1. Réacteur nucléaire (1)
- avec une isolation thermique (6) enfermant sa cuve de réacteur sous pression (3),
- avec une chambre d'inondation (7) située entre la cuve de réacteur sous pression (3) et l'isolation thermique (6), ainsi que
- avec une bague de protection (9) fixée dans la chambre d'inondation (7), qui sépare la chambre d'inondation (7) en deux chambres d'inondation (11) distinctes, sous la forme d'une barrière matérielle,
avec un canal de dérivation (12) reliant les deux chambres d'inondation (11) l'une à l'autre, qui est fermé lorsque le réacteur nucléaire (1) se trouve en état de fonctionnement normal et qu'il convient d'ouvrir en cas de défaillance.

2. Réacteur nucléaire (1) selon la revendication 1, dans lequel le canal de dérivation (12) est dirigé de manière à entourer l'loague de protection (9), tout au moins partiellement à l'intérieur d'une chape en béton (5) enveloppant la cuve de réacteur sous pression (3), y compris son isolation thermique (6).

3. Réacteur nucléaire (1) selon la revendication 1 ou 2, avec plusieurs canaux de dérivation (12) disposés de manière répartie autour de la circonférence de l'bague de protection (9).

4. Réacteur nucléaire (1) selon l'une des revendications 1 à 3, dans lequel un corps à flotteur (17) est positionné dans la chambre d'inondation (7), qui commande un corps de fermeture (15) du canal de dérivation (12), également disposé dans la chambre d'inondation (7), en fonction du niveau de liquide se trouvant dans la chambre d'inondation (7) et qui y est relié par entraînement par l'intermédiaire d'un mécanisme de couplage, en particulier d'un engrenage de couplage (16).

5. Réacteur nucléaire (1) selon la revendication 4, dans lequel un guidage (18) est prévu pour le corps à flotteur (17) et/ou pour les éléments de l'engrenage de couplage (16).

6. Réacteur nucléaire (1) selon l'une des revendications 4 à 5, dans lequel un élément de préhension (24), destiné au contrôle du bon fonctionnement lors des travaux de maintenance, est formé au niveau de la partie inférieure du corps à flotteur (17).

7. Réacteur nucléaire (1) selon l'une des revendications 1 à 6, dans lequel la fermeture d'un canal de dérivation (12) est essentiellement fabriquée à partir d'un matériau thermiquement isolant.
